# EUROPÄISCHE PATENTSCHRIFT

(11) **EP 1 197 719 B1**
(45) Veröffentlichungstag und Bekanntmachung des Hinweises auf die Patenterteilung: **06.04.2005**
(21) Anmeldenummer: 01124082.7
(22) Anmeldetag: 10.10.2001
(51) Int. Cl.: F27B 3/10, C21B 11/10

(54) **Elektroofen für die Stahlherstellung**
Electric arc furnace for steelmaking
Four à arc pour le traitement d'acier

(30) Priorität: 10.10.2000 DE 10049959
(43) Veröffentlichungstag der Anmeldung: 17.04.2002
(73) Patentinhaber: Georgsmarienhütte GmbH, 49124 Georgsmarienhütte (DE)
(72) Erfinder: Siek, Horst, 49205 Hasbergen (DE)
(74) Vertreter: Röther, Peter, Dipl.-Phys.

(56) Entgegenhaltungen:
- EP-A- 0 473 809
- WO-A-94/00400
- US-A- 3 282 580

## Beschreibung

Die Erfindung betrifft einen Elektroofen für die Stahlherstellung mit einem im Grundriß annähernd birnenförmigen Metallgefäß, bei dem die abstichseitige Grundrißlinie einen kleineren Radius aufweist als die dem Abstich entgegengesetzte und der Boden des Gefäßes im dem Abstich entgegengesetzten Bereich bombiert ausgebildet zur Gefäßseitenwand ansteigt und mittig im Boden die Anode angeordnet ist, wobei der Boden um die Anode herum mit mehreren Lagen aus Feuerfest-Steinen als Dauerfutter zugestellt ist, an das sich wandseitig aufsteigend, die gesamte Gefäßseitenwand abdeckend ein aus mehreren horizontalen Lagen von Feuerfest-Steinen gebildetes Verschleißfutter anschließt, wobei im Bereich der Übergangsstelle zwischen Boden und Gefäßseitenwand ein horizontaler Absatz als Aufnahmefläche für das Verschleißfutter gebildet ist (WO-A-94 00 400).

Während der Boden im Bereich zwischen der Anode und der Abstichseite nur geringfügig zur dortigen Seitenwand ansteigt und auch nur leicht gewölbt ist, steigt der Boden auf der anderen Seite durch die Bombierung relativ stark zur entsprechenden Seitenwand an, wodurch diese Seitenwand niedriger ist als die entgegengesetzte.

Die Zustellung mit dem Dauerfutter geschieht bislang in der Weise, daß die unterste Lage bis an den Beginn der Seitenwand heran reicht, während die darüber angeordneten Lagen ins Innere des Gefäßes zurückversetzt enden, so daß die Enden der Lagen auf einer horizontalen Linie liegen. Die so gebildete Endfläche weist naturgemäß infolge der quaderförmigen Ausbildung der Feuerfest-Steine Lücken auf, die mit Feuerfest-Material verfüllt werden müssen, so daß eine ebene Fläche entsteht, auf die dann die erste Lage des Verschleißfutters aufgesetzt wird.

Infolge des negativen Temperaturgradienten vom Gefäßinneren zur Gefäßwand dehnt sich die oberste Lage des Dauerfutters stärker in Längsrichtung aus als die darunter befindlichen. Hierdurch wird eine Kraft von unten auf die Lagen des Verschleißfutters ausgeübt, die bewirkt, daß die behälterinnenseitigen Enden der Steine des Verschleißfutters stärker noch oben gedrückt werden als die zur Gefäßseitenwand weisenden Enden der Steine.

Das hat zur Folge, daß sich zwischen den Lagen des Verschleißfutters Zwischenräume bilden, in die geschmolzenes Metall eindringen kann, was dazu führt, daß an diesen Stellen erhöhter Verschleiß auftritt, der dazu führt, daß die Zustellung des Ofens in relativ kurzen Abständen erneuert werden muß.

Der Erfindung liegt daher die Aufgabe zugrunde, einen Elektroofen der eingangs genannten Art so auszubilden, daß sich Verschleißfutter und Dauerfutter aufgrund thermischer Ursachen nicht negativ beeinflussen.

Die Erfindung löst diese Aufgabe dadurch, daß die Lagen des Dauerfutters nicht unter dem Verschleißfutter sondern seitlich an diesem oder am Absatz enden.

Hierdurch ist gewährleistet, daß durch die unterschiedliche Ausdehnung der Lagen des Dauerfutters beim Betrieb des Ofens im wesentlichen nur noch eine horizontale Kraftkomponente auf das Verschleißfutter wirken kann.

Hierdurch wird die Lebensdauer, insbesondere des Verschleißfutters erheblich gesteigert.

Gemäß einer ersten Alternative wird der horizontale Absatz dadurch gebildet, daß ein parallel zur Gefäßseitenwand verlaufendes, auf den Boden des Gefäßes geschweißtes, vertikales Blech vorgesehen ist, der Raum zwischen dem Blech und dem zur Wand weisenden Bodenbereich mit Feuerfest-Material verfüllt wird, derart, daß eine horizontale Ebene in Höhe der oberen Blechkante entsteht, auf der die erste Lage des Verschleißfutters aufgebracht ist.

Dabei ist dieses vertikal eingeschweißte Blech bei den Elektroöfen üblicher Bauart vom höherliegenden Übergangsbereich zwischen Boden und Gefäßseitenwand auf der bombierten Seite bis zur entgegengesetzten Abstichseite stückweise nach unten versetzt (entsprechend der Normstärke der verarbeiteten Feuerfest-Steine) angeordnet.

In einer zweiten Alternative gemäß Anspruch 3 ist vorgesehen, daß der horizontale Absatz dadurch gebildet ist, daß im Bereich der Übergangsstelle zwischen Boden und Gefäßseitenwand der Boden als horizontale Fläche ausgebildet ist, deren äußere Begrenzung die Gefäßwand ist.

Während die erste Alternative auch bei bereits vorhandenen Gefäßen verwirklicht werden kann, muß bei der zweiten Alternative das Gefäß schon bei der Herstellung entsprechend modifiziert werden. Vorteilhaft hierbei ist jedoch, daß keine korrosionsgefährdeten Schweißnähte vorgesehen sein müssen und auch kein zusätzliches Feuerfest-Material zur Herstellung der ebenen Auflagefläche wie bei der ersten Alternative.

Gemäß einer dritten Alternative wird der horizontale Absatz durch eine im Gefäßseitenwandbereich auf den Boden aufgeschweißte Stufe gebildet, deren horizontale Fläche an der Gefäßseitenwand endet.

Auch bei dieser dritten Alternative wird zur Herstellung des Absatzes kein zusätzliches Feuerfest-Material benötigt. Darüber hinaus hat diese Alternative den Vorteil mit der ersten Alternative gemein, daß sie auch bei bereits vorhandenen Gefäßen verwirklicht werden kann.

Bei allen drei Alternativen ist zum Ausgleich der Höhendifferenz zwischen bombierter Seite und Abstichseite des Gefäßes die stückweise versetzte Anordnung der Auflagefläche für das Verschleißfutter entsprechend der Normstärke der verwendeten Feuerfest-Steine notwendig.

Zur Vereinfachung wird daher gemäß Anspruch 5 vorgeschlagen, daß der Bombierungsradius so gewählt ist, daß der horizontale Absatz eine Ebene aufspannt, die geringfügig höher verläuft als der Bodenrand im Abstichbereich.

Hierzu ist ebenfalls eine Modifikation des Gefäßes bereits bei der Herstellung notwendig, insofern, als der Bombierungsradius größer gewählt werden muß als bei den üblichen Gefäßen. Nichtsdestoweniger ist jedoch hierdurch eine Niveauangleichung zwischen der Bodenrandhöhe im Bombierungsbereich und der Bodenhandhöhe im Abstichbereich gegeben.

Die Erfindung wird im folgenden anhand von Zeichnungen dargestellt und näher erläutert.

Es zeigen:
- Fig. 1:: Elektroofen in Aufsicht,
- Fig. 2:: Elektroofen gemäß Fig. 1 im Längsschnitt,
- Fig. 3:: Elektroofen gemäß Fig. 1 im Schnitt entlang der Linie A-A,
- Fig. 4:: Randbereich des Gefäßes in abgebrochener Darstellung in einer ersten Alternative,
- Fig. 5:: Randbereich des Gefäßes in abgebrochener Darstellung in einer zweiten Alternative,
- Fig. 6:: Randbereich des Gefäßes in abgebrochener Darstellung in einer dritten Alternative,
- Fig. 7:: Randbereich des Gefäßes in abgebrochener Darstellung gemäß Stand der Technik.

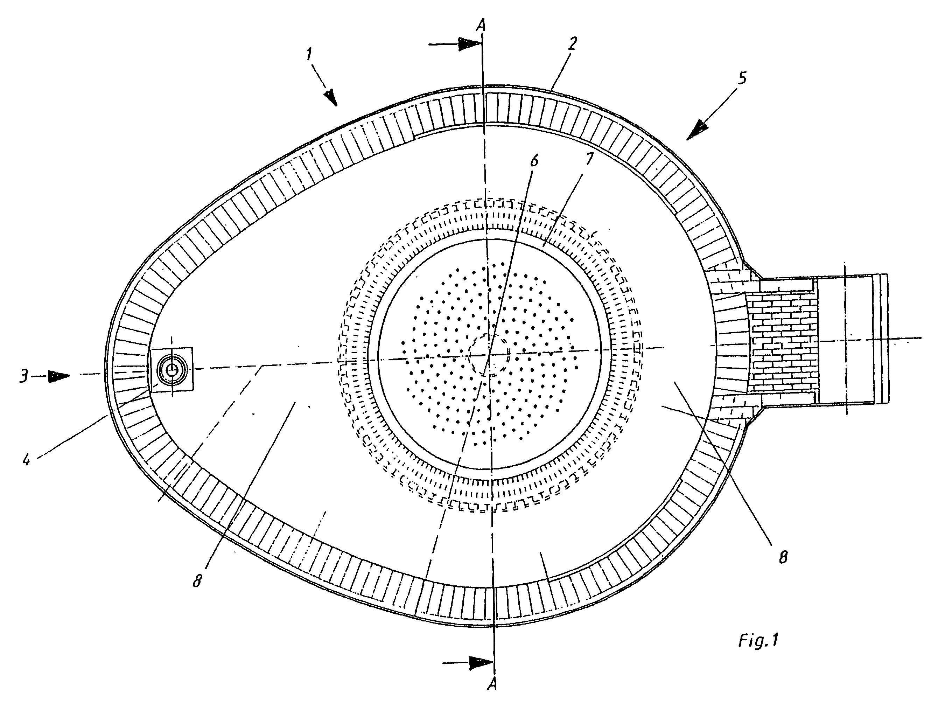

In den Figuren 1 bis 3 ist schematisch der Aufbau eines Elektroofens für die Stahlherstellung dargestellt und allgemein mit dem Bezugszeichen 1 versehen. Er verfügt über ein Metallgefäß 2, welches im Grundriß in etwa birnenförmig ausgestaltet ist, wobei im schmaler zulaufenden Bereich 3 der Abstich 4 vorgesehen ist.

Der entgegengesetzte Bereich 5 hingegen ist halbkreisförmig ausgebildet. Koaxial um den Mittelpunkt 6 dieses Halbkreises ist im Boden 8 des Gefäßes 2 die ringförmige Anode 7 eingelassen.

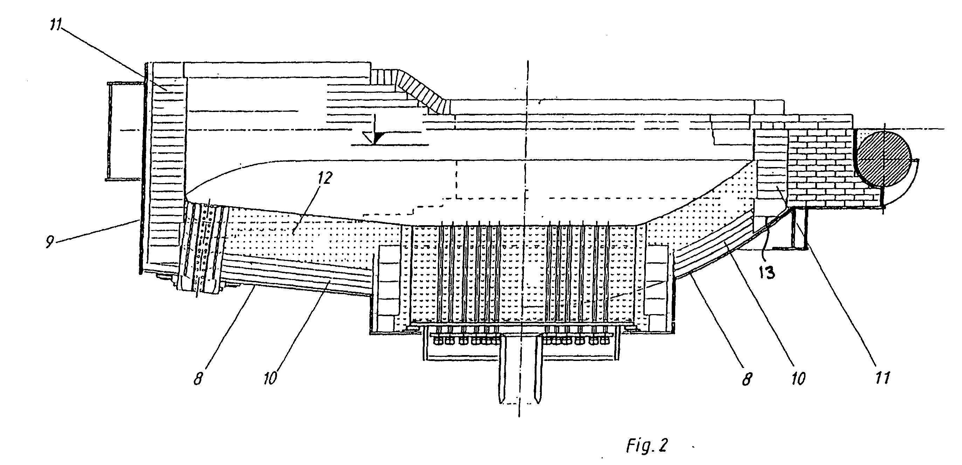

Wie aus der Fig. 2 hervorgeht, verläuft der Boden 8 im Bereich zwischen Anode 7 und Abstich 4 in einem spitzen Winkel zur Horizontalen zur dortigen Gefäßseitenwand 9, während der Boden 8 im Bereich 5 zwischen Anode 7 und der zugehörigen Seitenwand stärker noch oben gekrümmt ist, da der Gefäßboden in diesem Bereich bombiert ausgestaltet ist. Das Niveau des Bodenrandes liegt höher als das Niveau des Bodenrandes auf der Abstichseite.

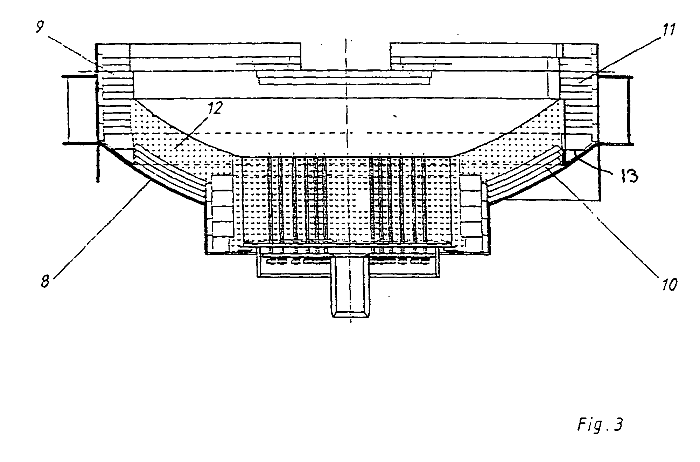

Das geht auch aus Fig. 3 hervor, die einen Schnitt entlang der Linie A-A aus Fig. 1 darstellt.

Rings um die Anode 7 ist der Boden mit einem Dauerfutter 10 zugestellt, das aus mehreren Lagen von Steinen aus feuerfestem Material gebildet ist. Im Gefäßseitenwandbereich schließt sich an dieses Dauerfutter 10 das aus mehreren Lagen horizontal übereinander angeordneten Feuerfest-Steinen gebildete Verschleißfutter 11 an.

Nach der Zustellung mit Dauerfutter 10 und Verschleißfutter 11 wird der Gefäßinnenraum mit Herdmasse 12 ausgekleidet.

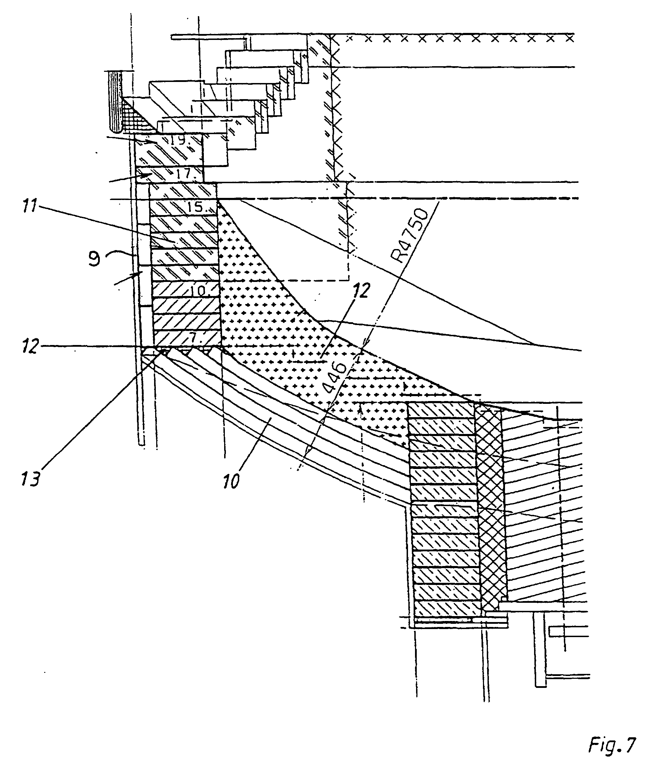

Wie aus der Fig. 7 hervorgeht, die den Stand der Technik darstellt, endet die unterste Lage des Verschleißfutters 10 an der Gefäßseitenwand 9, während die darüber liegenden Lagen mit ihren Enden zurückversetzt angeordnet sind, so daß die Enden der Lagen auf einer horizontalen Linie 12 liegen.

Hierdurch bilden sich Zwischenräume 13, die zur Herstellung einer ebenen Oberfläche mit feuerfestem Material verfüllt werden müssen. Auf der so entstandenen Ebene in der Höhe der Linie 12 werden nun die Lagen des Verschleißfutters 11 aufgebaut.

Beim Betrieb des Ofens wird infolge des negativen Temperaturgradienten von innen nach außen die oberste Schicht des Dauerfutters 10 höher erhitzt als die darunter liegenden Lagen, so daß sich die oberste Schicht stärker ausdehnt als die anderen. Hierdurch wird auf das Verschleißfutter eine Kraft ausgeübt, die bewirkt, daß die Lagen des Verschleißfutters 11 an ihren ins Gefäßinnere weisenden Enden stärker nach oben gedrückt werden als die gefäßwandseitigen Enden. Hierdurch entstehen zwischen den Lagen Zwischenräume, in die flüssiges Metall eindringen kann, was die Lebensdauer des Verschleißfutters entscheidend reduziert.

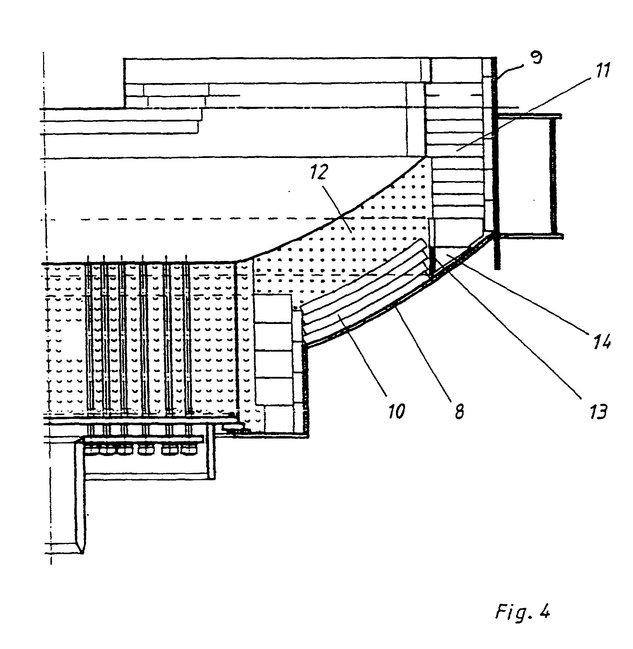

Um dies zu verhindern, wird gemäß einer ersten Alternative (dargestellt in Fig. 4) in der Nähe der Seitenwand 9 auf den Boden 8 ein vertikales Blech 13 aufgeschweißt. Somit entsteht zwischen dem Blech 13 und der dahinter liegenden Bodenfläche ein im Querschnitt in etwa dreieckiger Raum 14, der bis zur Oberkante des Bleches mit Feuerfest-Material ausgefüllt wird. Somit entsteht ein Absatz mit einer ebenen Auflagefläche, auf der die erste Lage des Verschleißfutters 11 aufgelegt wird.

Die Lagen des Dauerfutters werden hingegen so verlegt, daß ihre zur Gefäßwand weisenden Enden lediglich bis an das Blech 13 und darüber liegende Lage bis an die Seite des Verschleißfutters 11 reichen.

Somit sind schädliche, auf das Verschleißfutter 11 wirkende Kräfte durch thermische Ausdehnung der Lagen des Dauerfutters 10 so gut wie ausgeschlossen.

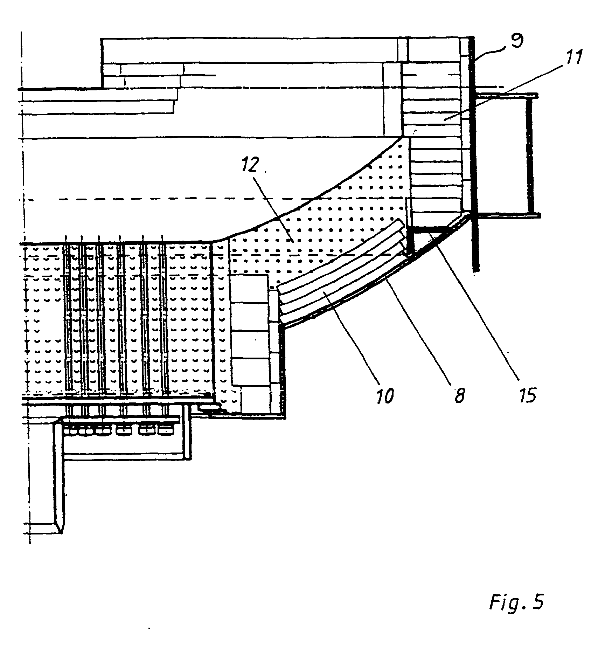

Eine zweite Alternative ist in der Fig. 5 dargestellt. Hier wird auf den Boden in der Nähe der Seitenwand 9 eine Stufe aus zwei im rechten Winkel zueinander verschweißten Blechen 15 aufgeschweißt, wobei das horizontal verlaufende Blech als Auflagefläche für die Lagen des Verschleißfutters 11 dient.

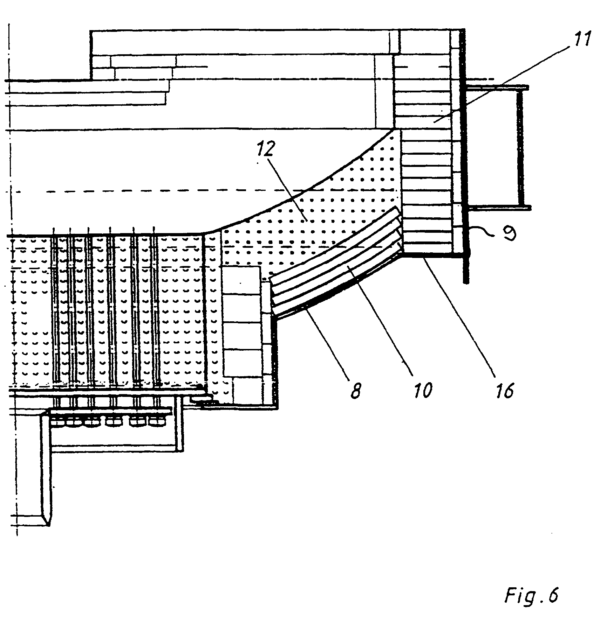

Die Fig. 6 zeigt eine dritte Alternative, bei der die Bombierung des Bodens auf der dem Abstich entgegengesetzten Seite des Gefäßes 2 einen größeren Radius aufweist als bei den vorhergehenden Ausführungsformen. Vor Erreichen der Gefäßseitenwand 9 verläuft der Boden horizontal, wodurch ebenfalls eine Auflagefläche für die Lagen des Verschleißfutters gebildet wird. Durch die geringere Wölbung des Bodens 8 in diesem Bereich liegt das Niveau dieser Auflagefläche nur geringfügig über dem Niveau des Bodenrandes auf der Abstichseite. Auf diese Weise gelingt der Niveau-Ausgleich der Auflageflächen für das Verschleißfutter 11 auf einfache Weise als bei den bekannten Gefäßen.

Alle drei Alternativen gemeinsam haben jedoch, daß das Dauerfutter 10 und das Verschleißfutter 11 lediglich seitliche Berührungspunkte haben, so daß die aufgrund thermischer Verformungen des Dauerfutters entstehenden Kräfte wenn überhaupt dann nur geringen Einfluß auf das Verschleißfutter haben.

## Patentansprüche

1. Elektroofen für die Stahlherstellung mit einem im Grundriß annähernd birnenförmigen Metallgefäß (2), bei dem die abstichseitige Grundrißlinie einen kleineren Radius aufweist als die dem Abstich (4) entgegengesetzte und der Boden (8) des Gefäßes (2) im dem Abstich (4) entgegengesetzten Bereich bombiert ausgebildet zur Gefäßseitenwand (9) ansteigt und mittig im Boden (8) die Anode (7) angeordnet ist, wobei der Boden (8) um die Anode (7) herum mit mehreren Lagen aus Feuerfest-Steinen als Dauerfutter (10) zugestellt ist, an das sich wandseitig aufsteigend, die gesamte Gefäßseitenwand (9) abdeckend ein aus mehreren horizontalen Lagen von Feuerfest-Steinen gebildetes Verschleißfutter (11) anschließt, wobei
im Bereich der Übergangsstelle zwischen Boden (8) und Gefäßseitenwand (9) ein horizontaler Absatz (13,15,16) als Aufnahmefläche für das Verschleißfutter (11) gebildet ist **dadurch gekennzeichnet, daß** die Lagen des Dauerfutters (10) nicht unter dem Verschleißfutters (11) sondern seitlich an diesem oder am Absatz (13,15,16) enden.

2. Elektroofen nach Anspruch 1,
**dadurch gekennzeichnet,**
**daß** der horizontale Absatz dadurch gebildet ist, daß ein parallel zur Gefäßseitenwand verlaufendes, auf den Boden (8) des Gefäßes (2) geschweißtes vertikales Blech (13) vorgesehen ist, der Raum (14) zwischen dem Blech (13) und dem zur Wand (9) weisenden Bodenbereich (8) mit Feuerfest-Material verfüllt wird, derart, daß eine horizontale Ebene in Höhe der oberen Blechkante entsteht, auf der die erste Lage des Verschleißfutters (11) aufgebracht ist.

3. Elektroofen nach Anspruch 1,
**dadurch gekennzeichnet**,
da**ß** der horizontale Absatz dadurch gebildet ist, daß im Bereich der Übergangsstelle zwischen Boden (8) und Gefäßseitenwand (9) der Boden (8) als horizontale Fläche (16) ausgebildet ist, deren äußere Begrenzung die Gefäßseitenwand (9) ist.

4. Elektroofen nach Anspruch 1,
**dadurch gekennzeichnet,**
**daß** der horizontale Absatz durch eine im Gefäßseitenwandbereich (9) auf den Boden (8) aufgeschweißte Stufe (15) gebildet ist, deren horizontale Fläche an der Gefäßseitenwand (9) endet.

5. Elektroofen nach einem der Ansprüche 1 b is 4,
**dadurch gekennzeichnet**,
da**ß** der Bombierungsradius so gewählt ist, daß der horizontale Absatz (13,15,16) eine Ebene aufspannt, die geringfügig höher verläuft als der Bodenrand im Abstichbereich (4).

## Claims

1. An electric furnace for making steel, having a metal vessel (2) which has an approximately pear-shaped footprint, in which the curve of the footprint on the tapping side has a smaller radius than that opposite the tap (4), and the base (8) of the vessel (2), which is constructed to be convex in the region opposite the tap (4), rises towards the side wall (9) of the vessel and the anode (7) is arranged centrally in the base (8), with the base (8) being lined around the anode (7) with a plurality of layers of refractory bricks as a permanent outer lining (10) which is adjoined, in a manner rising on the wall side and covering the entire side wall (9) of the vessel, by an inner lining (11) which is formed by a plurality of horizontal layers of refractory bricks, with a horizontal shoulder (13, 15, 16) being formed in the region of the transition between the base (8) and the side wall (9) of the vessel, as a receiving surface for the inner lining (11), **characterised in that** the layers of the permanent outer lining (10) do not end below the inner lining (11) but laterally in respect thereof or at the shoulder (13, 15, 16).

2. An electric furnace according to Claim 1, **characterised in that** the horizontal shoulder is formed **in that** a vertical plate (13) which is welded to the base (8) of the vessel (2) and runs parallel to the side wall of the vessel is provided, and the space (14) between the plate (13) and the region (8) of the base pointing towards the wall (9) is filled with refractory material such that a horizontal plane is produced at the level of the upper plate edge and the first layer of the inner lining (11) is laid thereon.

3. An electric furnace according to Claim 1, **characterised in that** the horizontal shoulder is formed **in that**, in the region of the transition between the base (8) and the side wall (9) of the vessel, the base (8) is constructed as a horizontal surface (16) whereof the outer delimitation is the side wall (9) of the vessel.

4. An electric furnace according to Claim 1, **characterised in that** the horizontal shoulder is formed by a step (15) which is welded onto the base (8) in the side wall region (9) of the vessel and whereof the horizontal surface ends at the side wall (9) of the vessel.

5. An electric furnace according to one of Claims 1 to 4, **characterised in that** the radius of the convex face is selected such that the horizontal shoulder (13, 15, 16) spans a plane which runs slightly higher up than the edge of the base in the tapping region (4).

## Revendications

1. Four électrique pour la production d'acier comportant un récipient métallique (2) de contour approximativement en forme de poire, dans lequel la ligne de contour côté trou de coulée présente un plus petit rayon que la ligne de contour opposée au trou de coulée (4) et le fond (8) du récipient (2) est réalisé bombé dans la zone opposée au trou de coulée (4), et monte vers la paroi latérale (9) du récipient, et l'anode (7) est disposée au milieu du fond (8), le fond (8) comportant autour de l'anode (7) plusieurs couches de briques réfractaires servant de revêtement permanent (10) auquel se raccorde, en montant côté paroi, un revêtement d'usure (11) recouvrant toute la paroi latérale (9) du récipient et formé de plusieurs couches horizontales de briques réfractaires, dans lequel, dans la zone du point de transition entre le fond (8) et la paroi latérale (9) du récipient est formé un décrochement horizontal (13, 15, 16) servant de surface de réception au revêtement d'usure (11),
**caractérisé**
**en ce que** les couches du revêtement permanent (10) ne se terminent pas sous le revêtement d'usure (11) mais sur le côté de celui-ci ou sur le décrochement (13, 15, 16).

2. Four électrique selon la revendication 1,
**caractérisé**
**en ce que** le décrochement horizontal est formé en ce qu'il est prévu une tôle verticale (13) s'étendant parallèlement à la paroi latérale du récipient et soudée sur le fond (8) du récipient (2), l'espace (14) entre la tôle (13) et la zone du fond (8) dirigée vers la paroi (9) est rempli d'un matériau réfractaire de manière qu'il se forme un plan horizontal à la hauteur du bord supérieur de la tôle, sur lequel est placée la première couche du revêtement d'usure (11).

3. Four électrique selon la revendication 1,
**caractérisé**
**en ce que** le décrochement horizontal est formé en ce que dans la zone du point de transition entre le fond (8) et la paroi latérale (9) du récipient, le fond (8) est réalisé comme surface horizontale (16) dont la délimitation extérieure est la paroi latérale (9) du récipient.

4. Four électrique selon la revendication 1,
**caractérisé**
**en ce que** le décrochement horizontal est formé par un gradin (15) soudé sur le fond (8) dans la zone (9) de la paroi latérale du récipient, dont la surface horizontale se termine sur la paroi latérale (9) du récipient.

5. Four électrique selon l'une des revendications 1 à 4,
**caractérisé**
**en ce que** le rayon du bombement est choisi de manière que le décrochement horizontal (13, 15, 16) définisse un plan qui s'étend légèrement plus haut que le bord du fond dans la zone du trou de coulée (4).
